# EUROPÄISCHE PATENTSCHRIFT

(11) **EP 1 462 306 B1**
(45) Veröffentlichungstag und Bekanntmachung des Hinweises auf die Patenterteilung: **28.11.2007**
(21) Anmeldenummer: 04007175.5
(22) Anmeldetag: 25.03.2004
(51) Int. Cl.: B60P 1/34, B66F 9/06, E02F 3/00

(54) **Arbeitsfahrzeug mit Lade- und Transportmöglichkeit**
Working vehicle with loading and transport capabilities
Véhicule de travail apte au chargement et au transport

(30) Priorität: 26.03.2003 DE 10313523
(43) Veröffentlichungstag der Anmeldung: 29.09.2004
(73) Patentinhaber: Bergmann, Johannes Hermann, 49733 Haren/Ems (DE)
(72) Erfinder: Bergmann, Johannes Hermann, 49733 Haren/Ems (DE)
(74) Vertreter: Habbel, Ludwig

(56) Entgegenhaltungen:
- EP-A- 0 955 226
- FR-A- 1 458 532
- FR-A- 2 629 438
- GB-A- 2 258 210

## Beschreibung

Die Erfindung betrifft ein Arbeitsfahrzeug gemäß dem Oberbegriff von Anspruch 1.

Aus der Praxis sind zwei grundsätzlich unterschiedliche Typen von Arbeitsfahrzeugen bekannt:

Erstens die sogenannten Lader, welche das zu bewegende Material stets vor dem Fahrzeugrahmen und damit insbesondere vor den Achsen des Fahrzeuges transportieren. Aufgrund der Bauart der Lader eignen sich diese nicht gut als Transportmittel für längere Transportwege.

Zweitens sind die Transportfahrzeuge bzw. Dumper bekannt, bei welchen die geladenen Güter stets auf bzw. über dem Fahrzeugrahmen befindlich sind und damit zumindest teilweise zwischen den beiden Achsen eines derartigen Fahrzeuges angeordnet sind.

Bei vielen Anwendungsfällen werden innerhalb eines Unternehmens beide Fahrzeugsorten benötigt, wenn auch nicht gleichzeitig, so dass die Anschaffungs- und Unterhaltskosten für beide Fahrzeugtypen aufgewendet werden müssen.

Aus der EP-0955226-A ist ein gattungsgemäßes Arbeitsfahrzeug bekannt, welches als Dumper ausgestaltet und bezeichnet ist. Die Ladefläche ist als Mulde ausgestaltet. Es ist nicht vorgesehen, die Mulde gegen andere Werkzeuge oder Anbauten auszuwechseln.

Aus der FR-2629438-A ist ein Arbeitsfahrzeug bekannt, welches am Fahrzeugrahmen eine Anschlussplatte aufweist, an welche eine Verbindungsbaugruppe anschließbar ist. Unterschiedlich ausgestaltete Verbindungsbaugruppen sind nicht nur für unterschiedliche Werkzeuge vorgesehen. Auch bei der Verwendung einer Ladefläche ist die unterschiedliche Ausgestaltung der Verbindungsbaugruppe vorgesehen, um unterschiedliche Bewegungen der Ladeflächen zu ermöglichen. In einer ersten Ausgestaltung der Verbindungsbaugruppe kann z. B. eine Parallelführung der z. B. horizontal ausgerichteten Ladefläche ermöglicht sein, wenn diese zwischen einer Be- und Entladestellung vor dem Fahrzeugrahmen und einer Transportstellung über dem Fahrzeugrahmen bogenförmig hin und her schwenkbar ist. In einer zweiten Ausgestaltung der Verbindungsbaugruppe kann z. B. eine Kippbewegung der Ladefläche ermöglicht sein, indem deren Hinterkante zwischen einer angehobenen Entladestellung und einer abgesenkten Transportstellung anhebbar ist.

Da für unterschiedliche Bewegungen der Ladefläche und für den Einsatz unterschiedlicher Werkzeuge unterschiedlich ausgestaltete Verbindungsbaugruppen erforderlich sind, ist der Aufwand beim Wechseln der Anbauten - wie der Ladefläche oder der Werkzeuge - groß:
Wenn eine Verbindungsbaugruppe stets in Anpassung an die unterschiedlichen Anbauten bzw. an die geünschten Beweglichkeiten eines Anbaus umgerüstet werden soll, so ist dies zeitaufwendig.
Dass die Verbindungsbaugruppe gemeinsam mit dem jeweiligen Anbau von der Anschlussplatte demontiert werden kann, legt es nahe, dass mehrere, jeweils optimal auf die jeweiligen Anbauten abgestimmte Verbindungsbaugruppen bereitgehalten und stets gemeinsam mit den den Anbauten gewechselt werden sollen, und dies ist ebenfalls wirtschaftlich nachteilig, da die Verbindungsbaugruppe mit einem darin vorgesehen Antriebsmotor und
Getriebemitteln einen erheblichen wirtschaftlichen Wert darstellt, der gegebenenfalls über längere Zeit nicht genutzt wird, wenn der entsprechende Anbau nicht benötigt wird.

Der Erfindung liegt die Aufgabe zugrunde, ein Arbeitsfahrzeug zu schaffen, welches wahlweise als Lader oder als Transportfahrzeug, also als Dumper genutzt werden kann.

Diese Aufgabe wird durch ein Arbeitsfahrzeug mit den Merkmalen des Anspruches 1 gelöst.

Die Erfindung schlägt mit anderen Worten vor, das Arbeitsfahrzeug mit einer Parallelhub-Einrichtung auszugestalten, welche einen Parallelhub ermöglicht. Wie von den Ladern bekannt, kann daher das Arbeitsgerät angehoben werden, wobei sichergestellt ist, dass aufgrund des Parallelhubes kein Verschwenken des Arbeitsgerätes erfolgt, so dass beim Anheben die Last zuverlässig gehalten wird und nicht etwa durch eine bei der Hubbewegung erfolgende Schrägstellung gefährdet ist.

Weiterhin schlägt die Erfindung vor, dass die Ladefläche kippbeweglich an der Parallelhub-Einrichtung gelagert ist, so dass im angehobenen Zustand die Ladefläche entleert werden kann. Da dies auch im angehobenen Zustand möglich ist, können mit Hilfe des vorgeschlagenen Arbeitsfahrzeuges beispielsweise Mulden von größeren Transportfahrzeugen befüllt werden.

Weiterhin sieht die Erfindung vorschlagsgemäß vor, dass der Schwerpunkt der Ladefläche, also beispielsweise einer Mulde, im abgesenkten Zustand zwischen den beiden Achsen des Fahrzeuges angeordnet ist, so dass es die Transporteigenschaften typischer Transportfahrzeuge bzw. typischer Dumper aufweist und zum Transport über längere Strecken problemlos geeignet ist.

Die begrenzten Einsatzmöglichkeiten klassischer Transportfahrzeuge überwindet das vorgeschlagene Fahrzeug dadurch, dass es an der Parallelhub-Einrichtung ein Anschlusselement aufweist, welches den Anschluss von Anbau-Werkzeugen ermöglicht, beispielsweise einer Schaufel oder einer Palettengabel. Vorzugsweise wird hierzu die Ladefläche, beispielsweise die ansonsten montierte Mulde, entfernt, so dass die Übersichtlichkeit für den Fahrer verbessert wird und der Blick auf diese Arbeitsge rate nicht durch die Mulde behindert wird. Die gesamte Parallelhubeinrichtung samt Antriebsmitteln und Anschlusselement verbleibt daher stets am Fahrzeug, so dass nur die vergleichsweise preiswerten Ladeflächen bzw. Arbeitswerkzeuge gewechselt werden müssen und gegebenenfalls ungenutzt sind.

Zudem ist vorschlagsgemäß in wirtschaftlich vorteilhafter und kostensparender Ausgestaltung sowie unter dem Einsatz besonders weniger Bauteile vorgesehen, lediglich einen einzigen Hydraulikzylinder vorzusehen, der im vorderen Bereich der Parallelhub-Einrichtung bei montierter Ladefläche sowohl das Kippen der Ladefläche ermöglicht als auch bei montiertem Arbeitsgerät das Kippen dieses Arbeitsgerätes, beispielsweise zum Entleeren einer montierten Schaufel, so dass bei Einsatz als Lader oder auch als Transportfahrzeug für den Benutzer in ergonomisch vorteilhafter Weise stets nur dieselben Bedienungselemente zu betätigen sind.

Vorteilhaft kann die Parallelhub-Einrichtung zwei im Abstand übereinander angeordnete Hubarme aufweisen, die relativ niedrig angeordnet sind und in Längsrichtung des Fahrzeuges verlaufen, wobei sich an das hintere Ende dieser beiden Abschnitte aufwärts erstreckende Abschnitte anschließen, die zu den Schwenklagern der Parallelhub-Einrichtung verlaufen. Auf diese Weise wird gegenüber den beiden Schwenklagern der Parallelhub-Einrichtung eine sehr tiefe Anordnung der Ladefläche ermöglicht, so dass beispielsweise der Muldenboden tiefer angeordnet ist als das untere der beiden Schwenklager. Hierdurch ist sichergestellt, dass die Arbeitsgeräte problemlos sehr tief angeordnet werden können, da sie problemlos an die sehr tief verlaufenden liegenden Abschnitte der Parallelhub-Einrichtung angeschlossen werden, wobei gleichzeitig für das Befüllen von beispielsweise hochbaudigen Transportfahrzeugen eine große Hubhöhe durch die L-förmige Ausgestaltung der Hubarme erzielt werden kann.

Ein Kopfbeschlag, der zur parallelartigen Führung der beiden übereinander angeordneten Hubarme vorgesehen sein kann, kann vorzugsweise auch jeweils zwei nebeneinander angeordnete Hubarme miteinander verbinden, so dass insgesamt die Parallelhubführung durch vier Hubarme gebildet wird, was eine entsprechend stabile Ausgestaltung der gesamten Parallelhub-Einrichtung bewirkt.

Vorteilhaft kann vorgesehen sein, dass das Arbeitsfahrzeug in seiner Betriebsart als Transportfahrzeug zu mehreren Seiten entleert werden kann. Hierdurch kann ein ansonsten notwendiger Rangieraufwand vermindert werden und zudem kann das Fahrzeug ggf. den Muldeninhalt auf eine Stelle abkippen, die aufgrund entsprechender baulicher Gegebenheiten auch nicht durch Rangierfahrten des Arbeitsfahrzeuges zugänglich wären.

Hierzu kann ein Drehkranz vorgesehen sein, auf dem die Mulde gelagert ist, so dass die Mulde zunächst in die gewünschte Richtung verdreht werden kann, um eine etwa vertikale Drehachse, bevor die Mulde angehoben und der Muldeninhalt abgekippt wird. Der Drehkranz kann vorteilhaft so ausgestaltet sein, dass die Mulde entweder nach vorne oder wahlweise zu einer der beiden Seiten des Fahrzeuges gekippt werden kann.

Alternativ kann vorgesehen sein, das Fahrzeug in seiner Ausgestaltung als Transportfahrzeug als Drei-Seiten-Kipper auszugestalten. Hierzu kann ein Hubzylinder zum Anheben der Mulde etwa mittig unter der Mulde angreifen und es kann, beispielsweise durch das manuelle Umstecken von Scharnierbolzen oder durch eine motorische Verfahrbarkeit derartiger Bolzen, vorgesehen sein, wahlweise eine längs oder eine quer zum Fahrzeug verlaufende Scharnierachse zu aktivieren, also wirksam werden zu lassen. Beim Anheben des etwa mittig unter die Mulde geführten Hubzylinders wird daher die Mulde jeweils um die Scharnierachse verschwenkt, die zuvor "aktiviert" wurde. Dabei kann eine Scharnierachse im vorderen Bereich der Mulde quer zum Fahrzeug verlaufen, so dass bei deren Aktivierung der Muldeninhalt nach vorne vor das Fahrzeug abgekippt wird. Ähnliche Scharnierachsen können an den beiden Längsseiten des Fahrzeuges vorgesehen sein, so dass die Mulde wahlweise zu einer der beiden Seiten des Fahrzeuges abkippen kann, je nach aktivierter Schwenkachse.

Vorteilhaft kann die Ladefläche entfernbar an der Parallelhub-Einrichtung befestigt sein. Beispielsweise in Form einer Schnellwechseleinrichtung kann eine Lagerung für die erwähnte Mulde vorgesehen sein, sodass diese Mulde entfernt werden kann, sobald das Fahrzeug nicht als Transportfahrzeug, sondern als Lader verwendet werden soll. Die Entfernung der Mulde ermöglicht eine bessere Übersicht über die Ladeeinrichtung und das geladene Gut.

Vorteilhaft kann die Frontplatte, die zur Aufnahme der Anbaugeräte dient, gemeinsam mit der Ladefläche gekippt werden. Auf diese Weise wird die Kippeinrichtung vereinfacht, da sie sowohl für die Ladeeinrichtung als auch für die Anbau-Werkzeuge genutzt werden kann. Auch die Bedienung für den Fahrer des Arbeitsfahrzeuges vereinfacht sich, da lediglich ein einziges Bedienungselement zum Kippen erforderlich ist, wobei gleichzeitig Mulde und Anbau-Werkzeug gekippt werden bzw. wenn nur die Ladefläche bzw. nur das Anbau-Werkzeug montiert ist, lediglich diese jeweils einzige Vorrichtung gekippt wird.

Dabei kann alternativ vorgesehen sein, wenn beispielsweise die Ladeeinrichtung ständig montiert bleiben soll, die Frontplatte unmittelbar mit der Ladeeinrichtung zu koppeln, um beide Elemente gleichzeitig zu kippen. Insbesondere wenn jedoch die Ladefläche demontierbar ausgestaltet ist, kann vorzugsweise die Kopplung der Frontplatte mit einem der Bauteile vorgesehen sein, welches gemeinsam mit der Ladefläche gekippt wird, beispielsweise eine Aufnahmeplatte oder ähnliche Lagerungselemente, an denen die Mulde befestigt werden kann.

Ausführungsbeispiele der Erfindung werden anhand der rein schematischen Zeichnungen nachstehend näher erläutert. Dabei zeigen die
- Fig. 1 bis 5: ein Arbeitsfahrzeug, welches als Transport-fahrzeug genutzt wird, die
- Fig. 6 und 7: dasselbe Fahrzeug, jedoch als Lader mit einer Palettengabel genutzt,
- Fig. 8: dasselbe Fahrzeug, jedoch als Lader mit einer Schaufel ausgerüstet,
- Fig. 9: eine ausschnittsweise Seitenansicht auf den Bereich der Ladeeinrichtung und eines gleichzeitig montierten Anbau-Werkzeugs, und
- Fig. 10: eine perspektivische Ansicht.

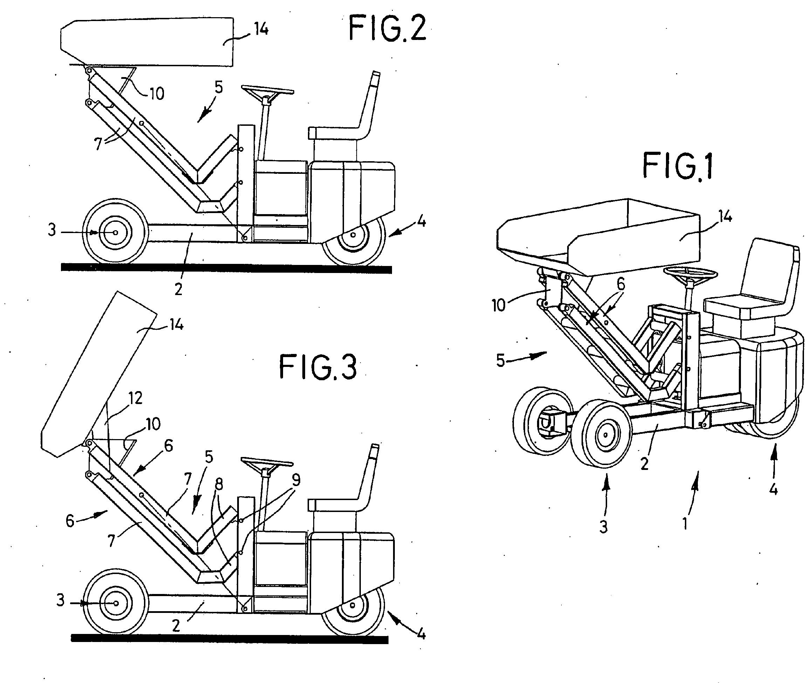

In Fig. 1 ist mit 1 insgesamt ein Arbeitsfahrzeug bezeichnet, mit einem Rahmen 2, einer Vorderachse 3 und einer Hinterachse 4 sowie einer Parallelhub-Einrichtung 5, die vier Hubarme 6 aufweist, die jeweils etwa L-förmig verlaufen und jeweils einen vorderen, liegenden Abschnitt 7 sowie einen hinteren, aufsteigenden Abschnitt 8 aufweisen. Die aufsteigenden Abschnitte 8 enden an Schwenklagern 9, um welche die gesamten Hubarme 6 verschwenkbar sind. An ihren vorderen Enden sind die Hubarme 6 durch einen insgesamt als Kopfplatte 10 bezeichneten Beschlag miteinander verbunden, der eine parallelogrammartige Führung der Hubarme 6 sicherstellt.

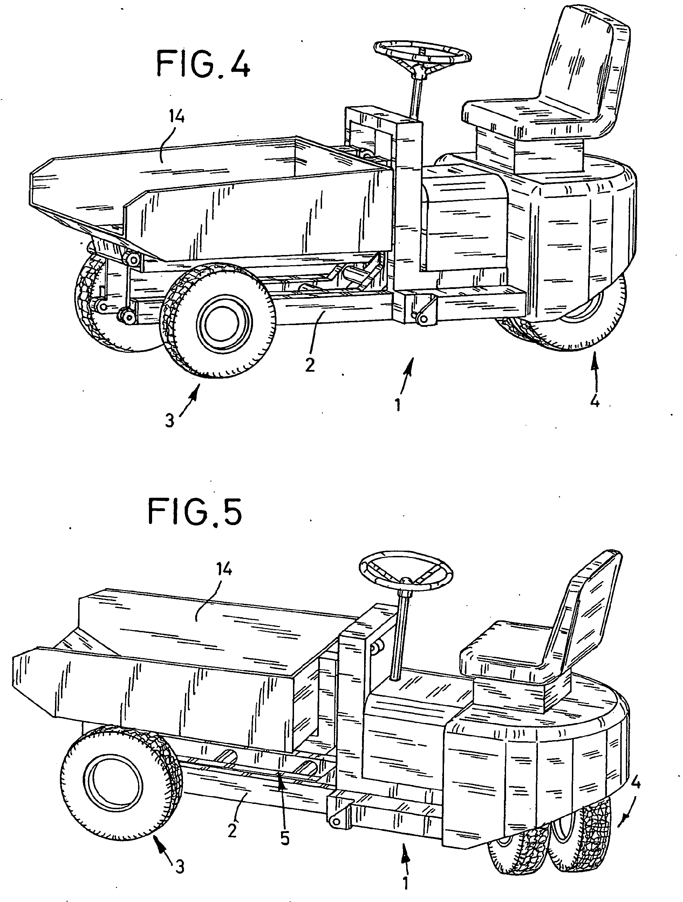

In den Fig. 2 und 3 ist ein Hydraulikzylinder 11 schematisch angedeutet, welcher für das Anheben bzw. Absenken der gesamten Parallelhub-Einrichtung 5 Sorge trägt. Im Bereich der Kopfplatte 10 ist ein weiterer Hydraulikzylinder 12 vorgesehen, ebenfalls strichpunktiert schematisch angedeutet, welcher für das Kippen einer Ladefläche 14 Sorge trägt, die aus ihrer waagerechten, abgesenkten Transportstellung, wie sie aus den Fig. 4 und 5 ersichtlich ist, in eine aus Fig. 1 und 2 ersichtliche, angehobene Stellung verbracht werden kann und die anschließend mittels dieses Hydraulikzylinders 12 gemäß Fig. 3 in eine Entladestellung gekippt werden kann.

Die gesamte Antriebs- und Lenkfunktion des Fahrzeuges 1 ist im hinteren Bereich des Fahrzeuges 1 kompakt zusammengefasst, wie insbesondere aus Fig. 5 ersichtlich wird, wo die gelenkten Räder der Hinterachse 4 in Kurvenstellung dargestellt sind.

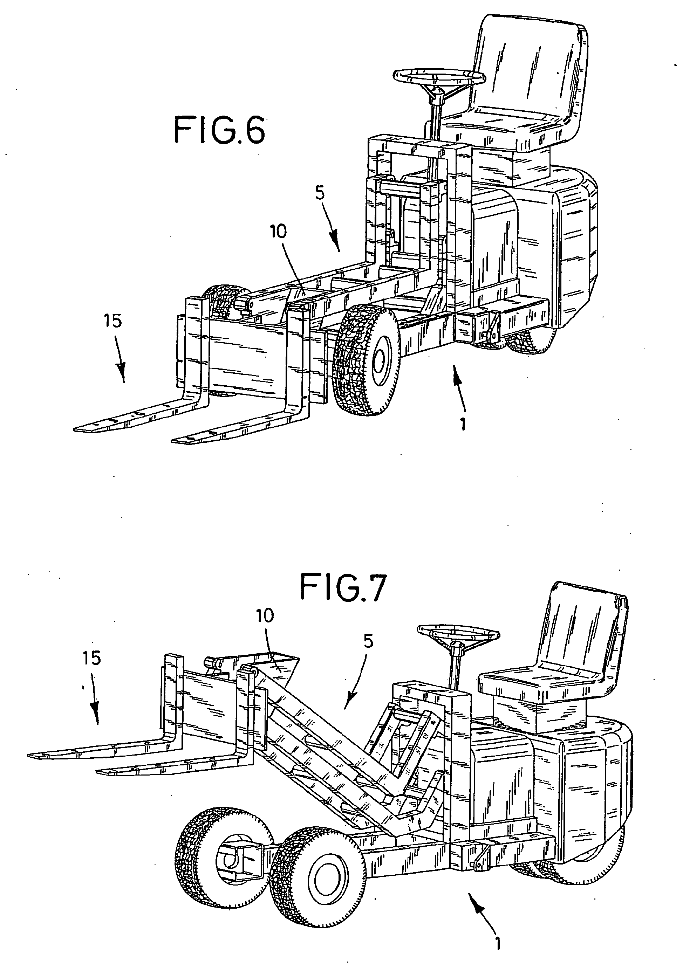

Die Fig. 6 und 7 zeigen das Fahrzeug 1 in einem Zustand, in welchem es vom Transportfahrzeug zu einem Lader umgebaut worden ist. Die Ladefläche 14 in Form einer Mulde ist hierzu entfernt worden und stattdessen ist an der Kopfplatte 10 eine Palettengabel 15 befestigt worden, die mit Hilfe der Parallelhub-Einrichtung 5 ebenfalls angehoben werden kann, wie insbesondere aus Fig. 7 ersichtlich ist. Dabei ist vorgesehen, den Hydraulikzylinder 12 an die Palettengabel 15 anzuschließen, so dass die Palettengabel 15 aus ihrer dargestellten, horizontalen Anordnung der Zinken in eine demgegenüber gekippte Stellung beweglich ist, unter Verwendung desselben Hydraulikzylinders 12, der beim Entladen zum Kippen der Ladefläche 14 verwendet wird.

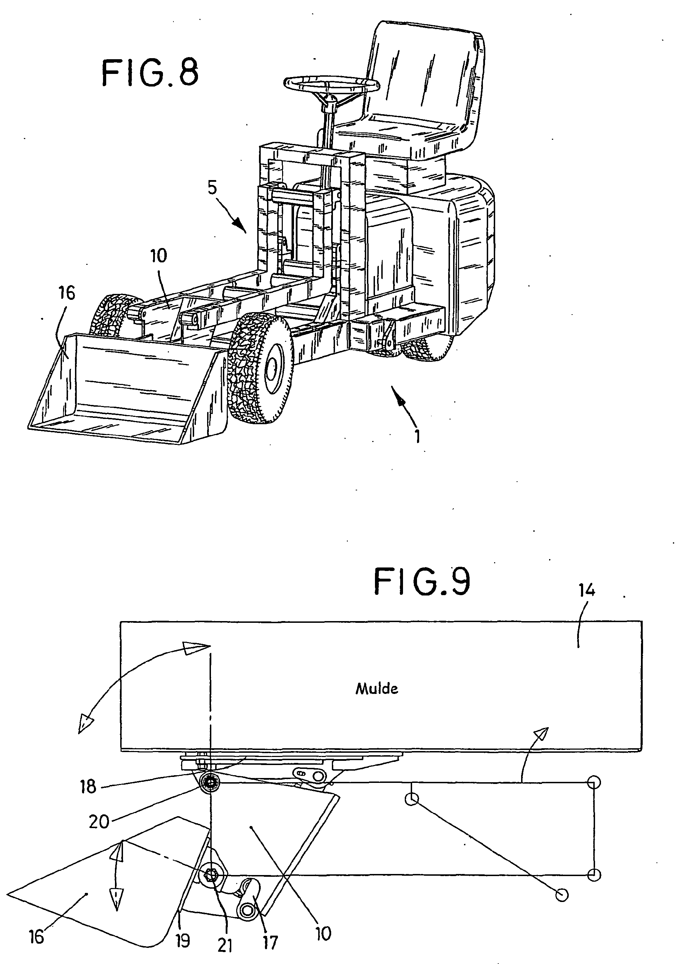

Fig. 8 zeigt eine weitere Umrüstung desselben Fahrzeuges 1, ebenfalls als Lader, wobei hier das Arbeitsgerät in Form einer Schaufel 16 ausgestaltet ist, welche an der Kopfplatte 10 befestigt wurde. Auch die Schaufel 16 kann mit Hilfe des Hydraulikzylinders 12 gekippt werden, wobei - wie bei der Palettengabel 5 - durch Wahl der entsprechenden Anlenkpunkte an den Arbeitsgeräten, d. h. an der Palettengabel 5 bzw. der Schaufel 16, mit Hilfe des Hydraulikzylinders 12 diese beiden Arbeitsgeräte gegenüber ihrer in den Fig. 6 bis 8 dargestellten Neutralstellung nicht nur zu einer Seite verschwenkt werden können, sondern ggf. zu beiden Seiten, so dass also beispielsweise die Spitzen der Zinken der Palettengabel 15 wahlweise bei Betätigung des Hydraulikzylinders 12 entweder angehoben oder abgesenkt werden können und ebenso die Schaufel 16 entweder für kurze Fahrtstrecken zum Fahrersitz hin gekippt werden kann als auch zum anschließenden Entladen in eine nach unten sich öffnende Stellung nach vorne gekippt werden kann.

In Fig. 9 ist der Bereich der Kopfplatte 10 näher erläutert. Die gesamte Baugruppe, die insgesamt als Frontplatte bezeichnet ist, weist insbesondere zwei einzelne Platten auf, die über eine Koppelstange 17 miteinander verbunden sind. Es handelt sich dabei einerseits um eine Schnellwechselplatte 18 zur Aufnahme der Mulde 14, wobei die Schnellwechselplatte 18 die schnelle Montage bzw. Demontage der Mulde 14 ermöglicht, sodass bei Nutzung des Arbeitsfahrzeuges 1 als Lader die Sicht auf die Ladeeinrichtung und das geladene Gut verbessert ist. Rein beispielhaft ist in Fig. 9 jedoch gezeigt, dass wahlweise auch sowohl die Ladeeinrichtung 14 als auch das Anbau-Werkzeug, nämlich die Schaufel 16 gleichzeitig am Arbeitsfahrzeug 1 befestigt sein könne.

Die anderen der beiden erwähnten Platten ist als Anbauplatte 19 zur Befestigung der Schaufel 16 vorgesehen und ebenfalls als Schnellwechsel-Einrichtung ausgestaltet, um die schnelle Montage bzw. Demontage des Anbau-Werkzeugs oder auch ein Auswechseln unterschiedlicher Anbau-Werkzeuge zu ermöglichen.

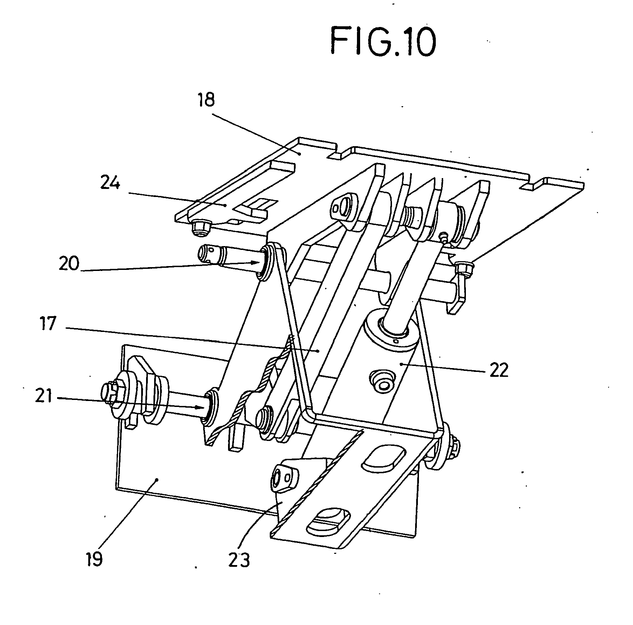

Die Ladefläche 14 ist gemeinsam mit der Schnellwechselplatte 18 um einen oberen Kipplagerpunkt 20 kippbar, während die Schaufel 16 um einen unteren Kipplagerpunkt 21 kippbar ist. Beide Bauteile werden, wie insbesondere aus Fig. 10 deutlich wird, mit Hilfe eines Hydraulikzylinders 22 bewegt, der sich an einem als Kipplager 23 bezeichneten Bauteil abstützt.

Die beiden Kipplagerpunkte 20 und 21 sind gleichzeitig auch die Punkte, an denen die gesamte Kopfplatte 10 mit den Abschnitten 7 der Parallelhub-Einrichtung 5 verbunden ist, um diese Abschnitte 7 parallelogrammartig zu führen.

Aus Fig. 10 ist weiterhin eine Verriegelung 24 ersichtlich, welche die schnelle Lösbarkeit der Ladeeinrichtung 14 von der Schnellwechselplatte 18 bzw. die schnelle Verriegelung einer Ladeeinrichtung an dieser Schnellwechselplatte 18 ermöglicht. In ähnlicher Weise ist auch die Anbauplatte 19 als Schnellwechsel-Einrichtung ausgestaltet.

## Patentansprüche

1. Arbeitsfahrzeug (1)
mit einer Parallelhubeinrichtung (5),
wobei an der Parallelhubeinrichtung (5) eine Ladefläche (14) zur Aufnahme von Nutzlast anbringbar ist- wie eine Mulde oder Pritsche,
und wobei die Ladefläche (14) kippbeweglich an der Parallelhubeinrichtung (5) gelagert ist,
und wobei der Schwerpunkt der Ladefläche (14) im abgesenkten Zustand zwischen zwei Achsen des Arbeitsfahrzeuges (1) angeordnet ist,
und mit einem Anschlusselement, welches vorne an der Parallelhubeinrichtung (5) angeordnet ist,
**dadurch gekennzeichnet,**
**dass** das als Frontplatte (10) bezeichnete Anschlusselement gemeinsam mit der Ladefläche kippbar ist,
wobei an der Frontplatte (10) zur Anbringung von Anbau-werkzeugen - wie einer Schaufel (16) oder einer Palettengabel - eine die schnelle Montage bzw. Demontage des Anbau-Werkzeugs ermöglichende Schnellwechsel-Einrichtung vorgesehen ist,
und **dass** ein Hydraulikzylinder (22) am vorderen Ende der Parallelhubeinrichtung (5) vorgesehen ist,
welcher auf die Ladefläche (14) bzw. auf die Frontplatte (10) einwirkt, derart, dass diese um eine horizontale, quer zur Fahrzeuglängsachse verlaufende Achse kippbar ist.

2. Arbeitsfahrzeug nach Anspruch 1, **dadurch gekennzeichnet, dass** die Parallelhubeinrichtung (5) zwei im Abstand übereinander angeordnete Hubarme (6) aufweist, welche etwa L-förmig verlaufen,
mit einem vorderen, liegenden Abschnitt (7) und einem hinteren, aufsteigenden Abschnitt (8),
wobei jeder Hubarm (6) am Ende des aufsteigenden Abschnittes (8) schwenkbeweglich gelagert ist.

3. Arbeitsfahrzeug nach Anspruch 2, **dadurch gekennzeichnet, dass** die beiden Hubarme (6) vorne mittels eines Kopfbeschlages (10) miteinander verbunden sind, derart, dass die Hubarme (6) parallelogrammartig geführt sind.

4. Arbeitsfahrzeug nach einem der vorhergehenden Ansprüche, **gekennzeichnet durch** einen Drehkranz, mittels dessen die Ladefläche (14) derart drehbar gelagert ist, dass sie wahlweise nach vorne oder nach zumindest einer der beiden Seiten des Fahrzeuges (1) kippbar ist.

5. Arbeitsfahrzeug nach einem der vorhergehenden Ansprüche, **dadurch gekennzeichnet, dass** die Ladefläche (14) als Drei-Seiten-Kippmulde ausgestaltet ist, derart, dass sie zwei wahlweise aktivierbare Schwenkachsen aufweist und beim Anheben der Ladefläche um wahlweise eine dieser beiden Achsen, nämlich die jeweils aktivierte Schwenkachse, kippbar ist.

6. Arbeitsfahrzeug (1) nach einem der vorhergehenden Ansprüche, **dadurch gekennzeichnet, dass** die Ladefläche (14) entfernbar an der Parallelhubeinrichtung (5) befestigt ist.

7. Arbeitsfahrzeug (1) nach einem der vorhergehenden Ansprüche, **dadurch gekennzeichnet, dass** die Frontplatte (10) kippbeweglich gelagert ist und mit der Ladefläche (14) verbunden ist, derart, dass die Frontplatte (10) und die Ladefläche (14) gemeinsam kippbeweglich sind.

8. Arbeitsfahrzeug (1) nach einem der Ansprüche 1 bis 6, **dadurch gekennzeichnet, dass** die Frontplatte (10) kippbeweglich gelagert ist und mit einem Bauteil verbunden ist, an welchem die Ladefläche (14) befestigt ist und welches gemeinsam mit der Ladefläche (14) kippbeweglich ist, derart, dass die Frontplatte (10) und dieses Bauteil gemeinsam kippbeweglich sind.

## Claims

1. Working vehicle (1)
with a parallel lifting device (5),
where a loading surface (14) e.g. a trough or a flatbed body, for receiving a payload, can be mounted on the parallel lifting device (5), and the loading surface (14) is mounted on bearings on the parallel lifting device (5), in such a way that it can be tipped, and where the centre of gravity of the loading surface (14) in the lowered state, is located between the two axles of the working vehicle (1),
and with a connecting element located at the front of the parallel lifting device (5),
**characterised in,**
**that** the connecting element termed front plate (10) can be tipped jointly with the loading surface (14),
where a quick-change device for mounting and removing add-on tools, such as a bucket (16) or a pallet fork, is provided on the front plate (10) and that a hydraulic cylinder (22) is provided at the front end of the parallel lifting device (5),
which acts on the loading surface (14) and on the front plate (10) in such a way that this tips around a horizontal axis running at right angles to the lengthwise axis of the vehicle.

2. Working vehicle according to claim 1, **characterised in that** the parallel lifting device (5), has two lifting arms (6) located at a distance above one another and which are approximately L-shaped with front horizontal section (7) and a rear rising section (8), where each lifting arm (6) is mounted on bearings at the end of the rising section (8) in such a way that it can turn.

3. Working vehicle according to claim 2, **characterised in that** the two lifting arms (6) are joined to one another at the front by means of a head plate (10) in such a way that the lifting arms (6) are guided in the shape of a parallelogram.

4. Working vehicle according to one of the preceding claims, **characterised by**
a live ring by means of which the loading surface (14) is mounted rotatably in such a way that it can be tipped forward or towards at least one of the two sides of the vehicle (1) as required.

5. Working vehicle according to one of the preceding claims, **characterised in**
**that** the loading surface (14) is designed as a three-sided tipping trough in such a way that it has two rotating axes which can be activated as required, and when the loading surface is lifted, can be tipped around one of these two axes as required, i.e. the rotating axis which is active in that case.

6. Working vehicle (1) according to one of the preceding claims, **characterised in**
**that** the loading surface (14) is attached to the parallel lifting device (5), in such a way that it can be removed.

7. Working vehicle (1) according to one of the preceding claims, **characterised in**
**that** the front plate (10) is mounted on bearings in such a way that it can be tipped and is joined to the loading surface (14) in such a way that the front plate (10) and the loading surface (14) can be tipped together.

8. Working vehicle (1) according to one of the claims 1 to 6, **characterised in**
**that** the front plate (10) is mounted on bearings in such a way that it can be tipped and is connected to a component on which the loading surface (14) is attached and which can tipped along with the loading surface (14) in such a way that the front plate (10) and this component can be tipped together.

## Revendications

1. Véhicule de travail (1) comprenant un dispositif de levage parallèle (5),
une surface de chargement (14) pouvant être placée sur le dispositif de levage parallèle (5) pour la réception d'une charge utile, telle qu'une benne ou une plate-forme,
et la surface de chargement (14) étant fixée de façon mobile et basculante sur le dispositif de levage parallèle (5),
et le centre de gravité de la surface de chargement (14) étant disposé, lorsqu'elle est abaissée, entre deux axes du véhicule de travail (1),
et un élément de raccordement, qui est disposé à l'avant sur le dispositif de levage parallèle (5),
**caractérisé**
**en ce que** l'élément de raccordement désigné par plaque frontale (10) peut basculer conjointement avec la surface de chargement,
un dispositif de changement rapide permettant le montage ou le démontage rapides de l'outil rapporté étant prévu sur la plaque frontale (10) pour le placement d'outils rapportés, comme une pelle (16) ou une fourche à palettes,
et **en ce qu'**un vérin hydraulique (22) est prévu sur l'extrémité avant du dispositif de levage parallèle (5),
lequel agit sur la surface de chargement (14), respectivement sur la plaque avant (10) de telle sorte que celle-ci peut basculer autour d'un axe horizontal et agencée transversalement à l'axe longitudinal du véhicule.

2. Véhicule de travail selon la revendication 1, **caractérisé en ce que** le dispositif de levage parallèle (5) présente deux bras de levage (6) disposés à distance l'un au-dessus de l'autre, lesquels sont agencés à peu près en L,
avec une partie (7) avant allongée et une partie (8) arrière grimpante,
chaque bras de levage (6) étant fixé de façon mobile et basculante sur l'extrémité de la partie (8) montante.

3. Véhicule de travail selon la revendication 2, **caractérisé en ce que** les deux bras de levage (6) sont reliés entre eux à l'avant au moyen d'une garniture de sommet (10), de telle sorte que les bras de levage (6) sont guidés en forme de parallélogramme.

4. Véhicule de travail selon l'une quelconque des revendications précédentes, **caractérisé par** une couronne de pivotement, au moyen de laquelle la surface de chargement (14) est fixée de façon rotative de telle sorte qu'elle peut basculer au choix vers l'avant ou au moins l'un des deux côtés du véhicule (1).

5. Véhicule de travail selon l'une quelconque des revendications précédentes, **caractérisé en ce que** la surface de chargement (14) est conçue comme une benne basculante à triple mouvement de bascule, de telle sorte qu'elle présente deux axes de pivotement pouvant être activés au choix et, lors du soulèvement de la surface de chargement, peut basculer autour de l'un de ces deux axes au choix, c'est-à-dire l'axe de pivotement respectivement activé.

6. Véhicule de travail (1) selon l'une quelconque des revendications précédentes, **caractérisé en ce que** la surface de chargement (14) est fixée de façon amovible sur le dispositif de levage parallèle (5).

7. Véhicule de travail (1) selon l'une quelconque des revendications précédentes, **caractérisé en ce que** la plaque avant (10) est logée de façon basculante et mobile et est reliée à la surface de chargement (14), de telle sorte que la plaque avant (10) et la surface de chargement (14) sont basculantes et mobiles conjointement.

8. Véhicule de travail (1) selon l'une quelconque des revendications 1 à 6, **caractérisé en ce que** la plaque avant (10) est fixée de façon basculante et mobile et est reliée à un composant, sur lequel la surface de chargement (14) est fixée et qui est basculant et mobile conjointement avec la surface de chargement (14), de telle sorte que la plaque avant (10) et ces composants sont basculants et mobiles conjointement.
